# EUROPEAN PATENT APPLICATION

(11) **EP 4 432 068 A1**
(43) Date of publication of application: **18.09.2024**
(21) Application number: 23191715.4
(22) Date of filing: 16.08.2023
(51) Int. Cl.: G06F 3/12, G06F 8/34, G06F 3/0482

(54) **INFORMATION PROCESSING SYSTEM, PROGRAM, AND INFORMATION PROCESSING METHOD**

(30) Priority: 16.03.2023 JP 2023042032
(71) Applicant: FUJIFILM Business Innovation Corp., Minato-ku Tokyo (JP)
(72) Inventor: MARUYAMA, Atsushi, Yokohama-shi, Kanagawa (JP)
(74) Representative: Kurig, Thomas

(57) **Abstract**

An information processing system includes: one or plural processors configured to: display a processing button indicating each of plural processes to be executed on a file in one direction on a display unit, and in a case where the plural processes corresponding to plural processing buttons are executed as a series of processes, display a stop display element indicating a stop location at which the series of processes is to be stopped, in association with the processing button; and in a case where an instruction to execute the series of processes is accepted from a user, automatically execute a process among the plural processes, corresponding to the processing button included up to the processing button associated with the stop display element, in succession according to an arrangement order of the processing buttons.

## Description

### BACKGROUND OF THE INVENTION

### (i) Field of the Invention

The present invention relates to an information processing system, a program, and an information processing method.

### (ii) Description of Related Art

In JP2000-76083A, there is described a job execution control apparatus capable of executing a plurality of jobs in parallel. In JP2000-76083A, there is disclosed the job execution control apparatus including a section that sets a condition for a job to be paused, a section that pauses a job satisfying the condition according to an event, a section that displays the paused job, and a section that specifies one or a plurality of jobs among the displayed jobs.

In JP5979857B, there is described a printing control apparatus including a printing control section that causes a printing apparatus to print an image in accordance with a printing condition for printing the image, and a control section that stops the printing by the printing apparatus such that the printing is stopped at a time according to the printing condition for the printing and a printing stop cause a case where the printing stop cause occurs while the printing apparatus is printing the image by the printing control section. In JP5979857B, the control section is disclosed to stop printing such that the printing is stopped at a time corresponding to a combination of a printing condition for printing and a printing stop cause for the printing, among four time points at which the printing can be stopped by the control section, corresponding to four combinations of a first printing condition or a second printing condition and a first printing stop cause or a second printing stop cause.

### SUMMARY OF THE INVENTION

For example, in order to automatically execute a plurality of processes in succession as a series of processes on a file, a mode of setting contents of the plurality of processes and an order in which each process is executed is assumed.

Here, although the same process is executed for the file, there are cases where it is not required to execute a subsequent process among the plurality of processes, or there is a case where it is required to temporarily stop the process in the middle of the series of processes.

An object of the present invention is to stop a series of processes on a file at a location required by a user.

According to a first aspect of the present disclosure, there is provided an information processing system including: one or a plurality of processors configured to: display a processing button indicating each of a plurality of processes to be executed on a file in one direction on a display unit, and in a case where the plurality of processes corresponding to a plurality of processing buttons are executed as a series of processes, display a stop display element indicating a stop location at which the series of processes is to be stopped, in association with the processing button; and in a case where an instruction to execute the series of processes is accepted from a user, automatically execute a process among the plurality of processes, corresponding to the processing button included up to the processing button associated with the stop display element, in succession according to an arrangement order of the processing buttons.

According to a second aspect of the present disclosure, in the information processing system according to the first aspect, the one or plurality of processors may be configured to: in a case where the instruction to execute the series of processes is accepted from the user, not automatically execute a process corresponding to the processing button that is not included up to the processing button associated with the stop display element.

According to a third aspect of the present disclosure, in the information processing system according to the first aspect, the one or plurality of processors may be configured to: in a case where the instruction to execute the series of processes is accepted from the user, temporarily stop a process corresponding to the processing button that is not included up to the processing button associated with the stop display element.

According to a fourth aspect of the present disclosure, in the information processing system according to the third aspect, the one or plurality of processors may be configured to: in a case where a condition for resuming is satisfied, automatically execute the temporarily stopped process among the plurality of processes in succession according to the arrangement order of the processing buttons.

According to a fifth aspect of the present disclosure, in the information processing system according to the third aspect, the one or plurality of processors may be configured to: in a case where the process corresponding to the processing button that is not included up to the processing button associated with the stop display element is temporarily stopped, display a resume instruction image for accepting an instruction to resume automatic execution on the temporarily stopped process among the plurality of processes from the user, on the display unit.

According to a sixth aspect of the present disclosure, in the information processing system according to any one of the first aspect to the fifth aspect, the one or plurality of processors may be configured to: display a start display element indicating a start location at which the series of processes is to be started, in association with the processing button; and in a case where the instruction to execute the series of processes is accepted from the user, automatically execute a process among the plurality of processes, corresponding to the processing button included from the processing button associated with the start display element to the processing button associated with the stop display element, in succession according to the arrangement order of the processing buttons.

According to a seventh aspect of the present disclosure, in the information processing system according to the sixth aspect, the one or plurality of processors may be configured to: in a case where the instruction to execute the series of processes is accepted from the user in a state in which a plurality of start display elements exist and one start display element is included after another start display element before the stop display element, automatically execute a process among the plurality of processes, corresponding to the processing button included from the processing button associated with the other start display element to the processing button associated with the stop display element, in succession according to the arrangement order of the processing buttons.

According to an eighth aspect of the present disclosure, in the information processing system according to the sixth aspect, the one or plurality of processors may be configured to: in a case where the instruction to execute the series of processes is accepted from the user in a state in which a plurality of start display elements exist and one start display element is included after another start display element before the stop display element, automatically execute a process among the plurality of processes, corresponding to the processing button included from the processing button associated with the other start display element to the processing button associated with the one start display element, in succession according to the arrangement order of the processing buttons.

According to a ninth aspect of the present disclosure, in the information processing system according to any one of the first aspect to the eighth aspect, the one or plurality of processors may be configured to: in a case where the instruction to execute the series of processes is accepted from the user in a state in which a plurality of the stop display elements exist and one stop display element is included before another stop display element, automatically execute a process among the plurality of processes, corresponding to the processing button included up to the processing button associated with the other stop display element, in succession according to an arrangement order of the processing buttons.

According to a tenth aspect of the present disclosure, in the information processing system according to the ninth aspect, the one or plurality of processors may be configured to: in a case where a predetermined condition is satisfied, automatically execute a process corresponding to the processing button included up to the processing button associated with the one stop display element, in succession according to the arrangement order of the processing buttons, and not automatically execute a process corresponding to the processing button that is not included up to the processing button associated with the one stop display element, among the plurality of processes.

According to an eleventh aspect of the present disclosure, in the information processing system according to the tenth aspect, the one or plurality of processors may be configured to: in a case where the predetermined condition is satisfied, temporarily stop and then, automatically execute a process among the plurality of processes, corresponding to the processing button from the processing button associated with the one stop display element to the processing button associated with the other stop display element, in succession according to the arrangement order of the processing buttons.

According to a twelfth aspect of the present disclosure, in the information processing system according to any one of the first aspect to the eleventh aspect, the one or plurality of processors may be configured to: in a case where the instruction to execute the series of processes is accepted from the user in a state in which the plurality of processes include a single process that is not included in the series of processes, automatically execute a process among the plurality of processes, that corresponds to the processing button included up to the processing button associated with the stop display element, and is different from the single process, in succession according to the arrangement order of the processing buttons.

According to a thirteenth aspect of the present disclosure, there is provided a program causing a computer to realize: a function of displaying a processing button indicating each of a plurality of processes to be executed on a file in one direction on a display unit, and displaying, in a case where the plurality of processes corresponding to a plurality of processing buttons are executed as a series of processes, a stop display element indicating a stop location at which the series of processes is to be stopped, in association with the processing button; and a function of automatically executing, in a case where an instruction to execute the series of processes is accepted from a user, a process among the plurality of processes, corresponding to the processing button included up to the processing button associated with the stop display element, in succession according to an arrangement order of the processing buttons.

According to a fourteenth aspect of the present disclosure, there is provided an information processing method including: displaying a processing button indicating each of a plurality of processes to be executed on a file in one direction on a display unit, and displaying, in a case where the plurality of processes corresponding to a plurality of processing buttons are executed as a series of processes, a stop display element indicating a stop location at which the series of processes is to be stopped, in association with the processing button; and automatically executing, in a case where an instruction to execute the series of processes is accepted from a user, a process among the plurality of processes, corresponding to the processing button included up to the processing button associated with the stop display element, in succession according to an arrangement order of the processing buttons.

According to the first aspect, the thirteenth aspect, and the fourteenth aspect of the present disclosure, it is possible to stop the series of processes on a file at a location required by the user.

According to the second aspect of the present disclosure, it is possible to avoid execution of a process unrequired by the user, among the series of processes on the file.

According to the third aspect of the present disclosure, it is possible to temporarily stop the series of processes at a location required by the user.

According to the fourth aspect of the present disclosure, in a case of executing the temporarily stopped process among the series of processes on the file, it is possible to improve efficiency of work of resuming the series of processes, as compared with a configuration in which an instruction of the user is required for each process.

According to the fifth aspect of the present disclosure, it is possible to improve efficiency of work of completing the plurality of processes, as compared with a configuration in which an execution instruction is accepted from the user for each processing button corresponding to the temporarily stopped process.

According to the sixth aspect of the present disclosure, it is possible to start the series of processes on the file from a location required by the user.

According to the seventh aspect of the present disclosure, as compared with a configuration in which automatic execution of the processes on the file is stopped at each start location, it is possible to improve efficiency of work of executing a subsequent process from a location required by the user for the series of processes on the file.

According to the eighth aspect of the present disclosure, it is possible to improve efficiency of work of completing the series of processes while checking the file at a location required by the user, as compared with a configuration in which the series of processes on the file is stopped only at a stop location.

According to the ninth aspect of the present disclosure, it is possible to improve efficiency of work of completing the plurality of processes on the file, as compared with a configuration in which automatic execution of the process on the file is stopped at each stop location.

According to the tenth aspect of the present disclosure, it is possible to improve accuracy of the series of processes on the file, as compared with a configuration in which the series of processes on the file is not uniformly stopped at an upstream stop location.

According to the eleventh aspect of the present disclosure, in a case where the series of processes on the file is stopped at the upstream stop location, it is possible to improve efficiency of work of completing the series of processes, as compared with a configuration in which the execution of the series of processes is stopped, and a subsequent process from the stop location is not executed.

According to the twelfth aspect of the present disclosure, it is possible to improve efficiency of work of executing the processes required by the user as the series of processes, as compared with a configuration in which the execution of the series of processes is stopped at an order of the processing button corresponding to the process that is not included in the series of processes on the file.

### BRIEF DESCRIPTION OF THE DRAWINGS

Exemplary embodiment(s) of the present invention will be described in detail based on the following figures, wherein:
Fig. 1 is a diagram illustrating an example of an overall configuration of an information processing system to which the present exemplary embodiment is applied;
Fig. 2 is a diagram illustrating an example of a hardware configuration of a management server and a user terminal according to the present exemplary embodiment;
Fig. 3 is a diagram illustrating an example of a functional configuration of the user terminal according to the present exemplary embodiment;
Fig. 4 is a diagram illustrating an example of a functional configuration of the management server according to the present exemplary embodiment;
Fig. 5 is a diagram illustrating an example of a display example in a display unit to which the present exemplary embodiment is applied;
Fig. 6 is a diagram illustrating an example of a display example of a toolbar to which the present exemplary embodiment is applied;
Figs. 7A and 7B are diagrams illustrating another example of the display example of the toolbar to which the present exemplary embodiment is applied, Fig. 7A illustrates a state before a series of processes is temporarily stopped, and Fig. 7B illustrates a state before the series of processes is resumed;
Figs. 8A and 8B are diagrams illustrating still another example of the display example of the toolbar to which the present exemplary embodiment is applied, Fig. 8A illustrates a case where a start location is included, and Fig. 8B illustrates a case where the start location and a stop location are included;
Figs. 9A and 9B are diagrams illustrating still another example of the display example of the toolbar to which the present exemplary embodiment is applied, Fig. 9A illustrates a case where a plurality of start locations are included, and Fig. 9B illustrates a case where a plurality of stop locations are included;
Fig. 10 is a flowchart illustrating a flow of the series of processes according to the present exemplary embodiment; and
Figs. 11A and 11B are diagrams illustrating still another example of the display example of the toolbar to which the present exemplary embodiment is applied, Fig. 11A illustrates a case where an end badge image is displayed, and Fig. 11B illustrates a case where a processing button associated with the stop location is highlighted.

### DETAILED DESCRIPTION OF THE INVENTION

Hereinafter, exemplary embodiments of the present invention will be described in detail with reference to drawings.

### (Configuration of Information Processing System)

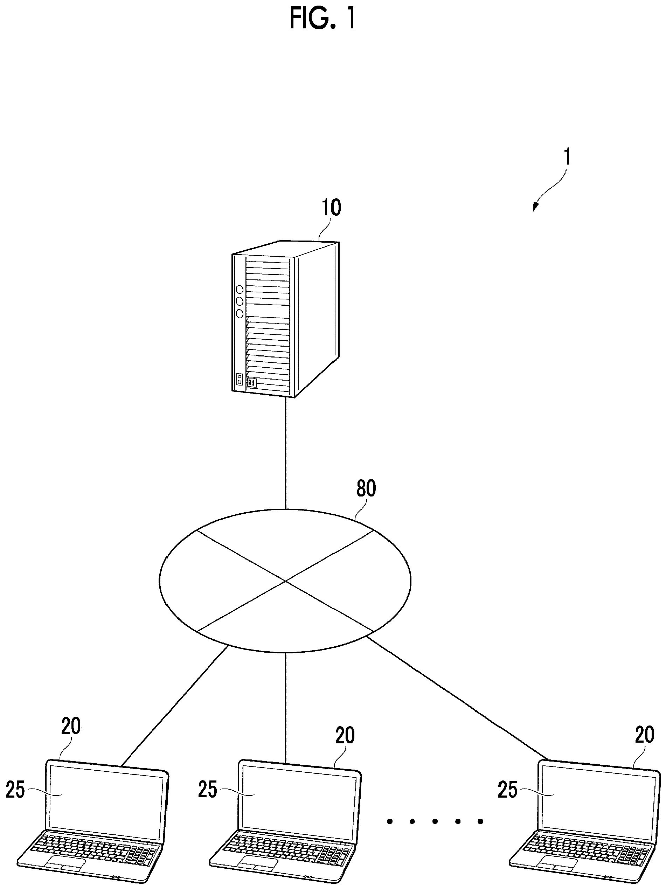

Fig. 1 is a diagram illustrating an example of an overall configuration of an information processing system 1 to which the present exemplary embodiment is applied.

The information processing system 1 according to the present exemplary embodiment is configured by connecting a management server 10 that manages a file of a user and a user terminal 20 that is a terminal operated by the user via a communication line 80. The communication line 80 is, for example, a line such as the Internet, and is used in information communication between the management server 10 and the user terminal 20.

Here, in the present exemplary embodiment, the "file" is an electronic file stored in the management server 10 or the like. This file includes image data, moving image data, sound data, text data, a program, or a combination of at least two thereof. In addition, the file may include attribute information such as a creation date and time, an update date and time, a creator, an editor, a paper size, the number of pages, a format, and a file name of the file, a keyword in the file, and the like. The format of the file is not particularly limited, and the format of the file managed by the management server 10 may be limited.

The management server 10 in the present exemplary embodiment is an information processing apparatus that provides a service for managing files (hereinafter, referred to as a "file management service"). For example, the management server 10 provides a storage location for storing a file as the file management service. The stored file may be shared with another user different from the user who instructs to store the file. Further, for example, the management server 10 executes a process of a command that can be executed on the stored file as the file management service.

In the information processing system 1 illustrated in Fig. 1, the management server 10 is configured with one server, and may be configured with a plurality of servers. Further, the management server 10 may be configured as a so-called cloud server, or may be configured as an on-premises type server.

The user terminal 20 in the present exemplary embodiment is an apparatus operated by a user to execute processing on a file. Each of the user terminals 20 is provided with a display unit 25 consisting of a liquid crystal display panel, an organic electro luminescence (EL) display panel, or the like for displaying an image, text information, or the like to the user. The user terminal 20 is realized by, for example, a computer, a tablet-type information terminal, a smartphone, a game device, and other information processing apparatuses.

The configuration of the information processing system 1 described above is an example, and the information processing system 1 as a whole may have a function of realizing the above processes. Therefore, a part or entirety of the function for realizing the process described above may be shared or cooperated in the information processing system 1. In other words, the part or entirety of the function of the management server 10 may be a function of the user terminal 20, or the part or entirety of the function of the user terminal 20 may be a function of the management server 10. Further, a part or entirety of the function of the management server 10 and each of the user terminals 20 constituting the information processing system 1 may be transferred to another server or the like (not illustrated). Therefore, the processes of the information processing system 1 as an entirety are promoted, and the processes can be complemented with each other.

In the following, a case is assumed in which a user who uses the file management service via the user terminal 20 sets a timing at which a plurality of processes automatically executed in succession on a file are stopped in the middle. In other words, a case is assumed that a user who uses the user terminal 20 sets a location (hereinafter, referred to as a "stop location") for stopping a series of processes on a file stored in the management server 10. The "series of processes" is a plurality of processes that are automatically executed in succession in a predetermined order without an instruction of the user for executing each process. The series of processes is created, for example, by setting contents of the plurality of processes and the order in which each process is executed by the user.

Here, an outline of a function of the management server 10 to which the information processing system 1 of the present exemplary embodiment is applied will be described.

The management server 10 accepts an instruction to execute a plurality of processes as a series of processes on a file in response to an operation of a user on the user terminal 20. The management server 10 starts the series of processes on the file. In addition, among the plurality of processes, the management server 10 automatically executes processes up to a stop location in succession in a predetermined order, on the file.

Since the management server 10 of the present exemplary embodiment has the function described above, the series of processes on the file is stopped at the stop location set by the user. For example, according to the present exemplary embodiment, among the plurality of processes automatically executed continuously as the series of processes, a process which the user does not want to automatically execute is prevented from being automatically executed in succession. Further, for example, according to the present exemplary embodiment, it is not necessary for the user to instruct a stop during the execution of the series of processes.

In the present exemplary embodiment, it is not necessary to create a series of processes for each range in which the process is automatically executed continuously, to instruct the user to stop the series of processes while executing the series of processes, or the like, and it contributes to improve workability of the user who wants to execute the plurality of processes on the file.

Hereinafter, the information processing system 1 according to the present exemplary embodiment will be described in detail.

### (Hardware Configuration)

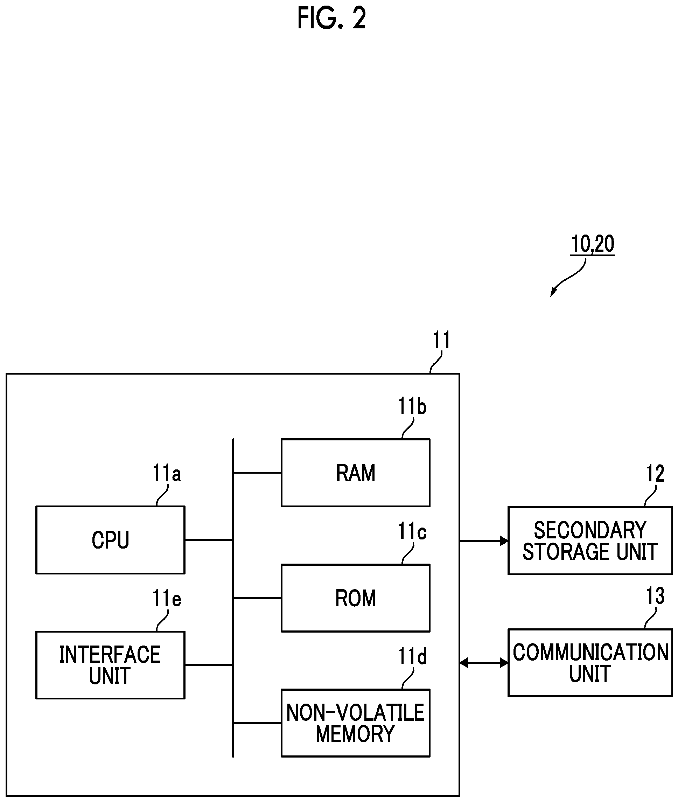

Fig. 2 is a diagram illustrating an example of a hardware configuration of the management server 10 and the user terminal 20 according to the present exemplary embodiment.

Each device of the management server 10 and the user terminal 20 includes a control unit 11 that controls an operation of the entire device, a secondary storage unit 12 in which various types of information is recorded, and a communication unit 13 that performs transmission and reception of information via the communication line 80 (see Fig. 1). The control unit 11, the secondary storage unit 12, and the communication unit 13 are connected to each other through a bus or a signal line.

The control unit 11 includes a CPU 11a that controls an entire apparatus as an example of a processor, a RAM 11b that is used as a working memory or the like of the CPU 11a, and a ROM 11c that stores a program or the like executed by the CPU 11a. Further, the control unit 11 includes a non-volatile memory 11d capable of holding data in a rewritable manner even in a case where power supply is interrupted, and an interface unit 11e that controls each unit such as the communication unit 13 connected to the control unit 11.

The non-volatile memory 11d is configured with, for example, an SRAM, a flash memory, or the like backed up by a battery. Further, in a case where the control unit 11 reads a program stored in the secondary storage unit 12, each process is executed by each apparatus of the present exemplary embodiment.

The secondary storage unit 12 is configured with, for example, a hard disk device (HDD), a semiconductor memory, or the like. The secondary storage unit 12 is different depending on a product form of each device. The secondary storage unit 12 stores a program to be executed by the control unit 11 or various types of information.

In addition, the user terminal 20 includes an input device (not illustrated) such as a keyboard or a mouse and the display unit 25 (see Fig. 1) configured with a liquid crystal display and the like. In a case where the input device of the user terminal 20 is a touch panel, the user terminal 20 may be provided integrally with the display unit 25.

### (Functional Configuration of User Terminal 20)

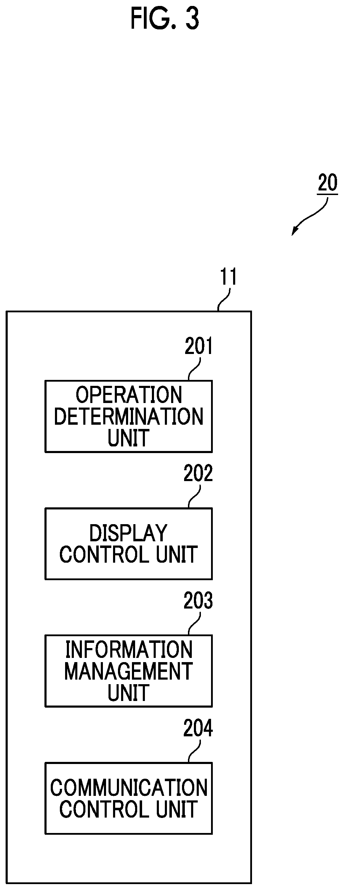

Fig. 3 is a block diagram illustrating an example of a functional configuration of the user terminal 20 according to the present exemplary embodiment. Each function of the user terminal 20 illustrated in Fig. 3 is generally realized by the CPU 11a (see Fig. 2) of the control unit 11.

As illustrated in Fig. 3, the user terminal 20 includes an operation determination unit 201 that determines an operation by a user, a display control unit 202 that controls a display of the display unit 25 (see Fig. 1), an information management unit 203 that manages various types of information, and a communication control unit 204 that controls communication via the communication unit 13 (see Fig. 2).

The operation determination unit 201 determines whether or not a user operation is performed on the user terminal 20 via an input device or the like. The "user operation" is, for example, an operation of instructing the user to browse a file, an operation of instructing a setting or execution of a process on the file, and the like.

The display control unit 202 controls a display mode or the like on the display unit 25. The display control unit 202 controls, for example, the display mode such as a screen in a case where a file management service is used.

The information management unit 203 manages information related to the file. Specifically, the information management unit 203 manages information used in using a service of executing a process on the file in the file management service. The information managed by the information management unit 203 is, for example, information on the file itself, attribute information of the file, information indicating a content of the process on the file, information indicating a setting related to a series of processes, or the like.

The communication control unit 204 processes information to be transmitted by the communication unit 13, and processes the received information. Specifically, the communication control unit 204 requests the management server 10 (see Fig. 1) to provide a file management service via the communication unit 13, or extracts necessary information from information transmitted from the management server 10 via the communication unit 13. The communication control unit 204 processes the acquired information to make a determination.

### (Functional Configuration of Management Server 10)

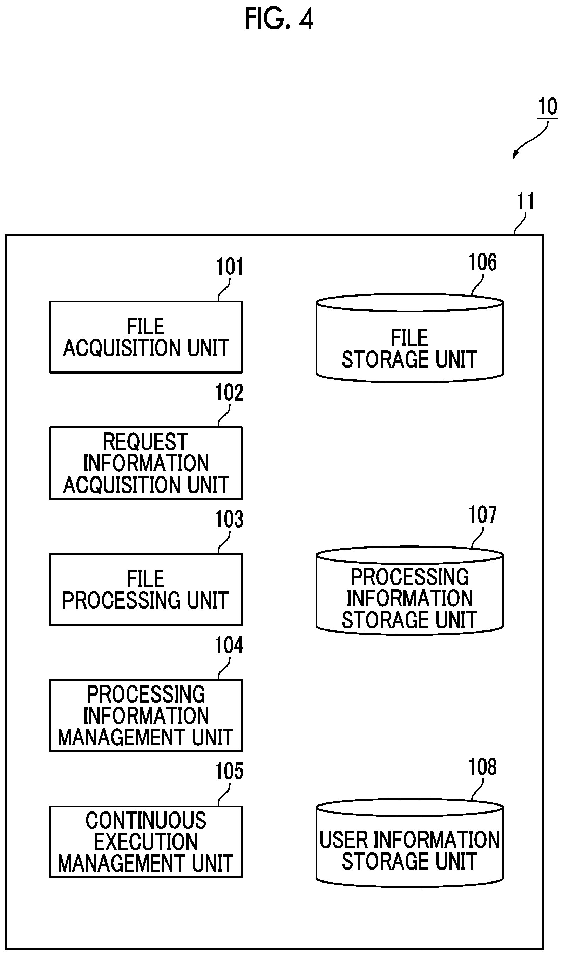

Fig. 4 is a diagram illustrating an example of a functional configuration of the management server 10 according to the present exemplary embodiment. Each function of the management server 10 illustrated in Fig. 4 is generally realized by the CPU 11a (see Fig. 2) of the control unit 11.

As illustrated in Fig. 4, the management server 10 includes a file acquisition unit 101 that acquires information on a file, a request information acquisition unit 102 that acquires request information indicating a request of a user, a file processing unit 103 that executes a process on the file, a processing information management unit 104 that manages the processing information that is information on the process, and a continuous execution management unit 105 that manages continuous execution of a plurality of processes. In addition, the management server 10 includes a file storage unit 106 that stores the information on the file, a processing information storage unit 107 that stores the processing information, and a user information storage unit 108 that stores user information that is information on the user who uses a file management service.

The file acquisition unit 101 acquires information on the file such as contents of the file itself or attribute information of the file. Specifically, the file acquisition unit 101 acquires the information on the file, from various types of information received from another apparatus or various types of information stored in the secondary storage unit 12 (see Fig. 2) of the management server 10. The other apparatus includes, for example, the user terminal 20 (see Fig. 1). In addition, the file acquisition unit 101 stores the acquired information on the file in the file storage unit 106.

The request information acquisition unit 102 acquires request information via the user terminal 20. Specifically, the request information acquisition unit 102 acquires the request information input by the user via the user terminal 20, via the communication line 80. A method by which the request information acquisition unit 102 acquires the request information is not limited to the method described above.

The file processing unit 103 executes a command that is an example of a function that can be executed on the file. Specifically, the file processing unit 103 executes a process on the file acquired by the file acquisition unit 101. For example, the file processing unit 103 executes a document process such as editing on a file, an output of a file, and specifying a file or a folder which is a storage location of the file.

Here, the "editing on a file" is a process of changing a file body, attribute information of the file, and a data format. The editing of the file body includes editing contents of the file body and editing an annotation added to the file body. The editing of the contents of the file body includes changing, adding, or deleting text data or the like of the file body. The editing of the annotation includes adding an annotation to the file body, and changing or deleting the annotation added to the file body. In addition, the concept of editing the file body includes a process of dividing one file into a plurality of files in page units, a process of bundling a plurality of files into one, a process of rotating a file, a process of compressing data of the file, and a process of encrypting the file.

Further, the "output of a file" is a process of sharing file data including image data of the file body. By sharing the file data, for example, an image forming apparatus may be used to print the file, or the file may be transmitted by e-mail or facsimile.

In addition, the "specifying of a file or a folder" is a process of searching for a file or a folder corresponding to a condition from the file storage unit 106. For example, the condition is provided for a text included in a name, a data format, a creator, and the like. In addition, a screen for requesting a user to select a file to be processed in the subsequent stage may be displayed in the middle of a series of processes.

The processing information management unit 104 manages processing information of a process executed by the file processing unit 103. Specifically, the processing information management unit 104 manages the processing information such as a condition for the file on which the process is to be executed (hereinafter, referred to as an "execution condition"), in addition to a type or a category of the process, a content of the process, and a detailed setting of the process.

In addition, the processing information management unit 104 manages processing information regarding a series of processes. Specifically, the processing information management unit 104 manages information indicating contents of a plurality of processes and an order in which each of the plurality of processes is executed, as the processing information for the series of processes.

The processing information management unit 104 stores the processing information in the processing information storage unit 107 in association with image data indicating the corresponding process. In addition, the processing information management unit 104 provides the image data indicating the process to the user terminal 20 via the communication unit 13 (see Fig. 2).

The continuous execution management unit 105 manages execution of a command which is an example of a function that can be executed on the file. Specifically, the continuous execution management unit 105 manages continuous automatic execution of the plurality of processes by the file processing unit 103. In other words, the continuous execution management unit 105 causes the file processing unit 103 to manage the series of processes.

The continuous execution management unit 105 sets a stop location of the series of processes based on request information of the user, and stores information indicating the stop location in the processing information storage unit 107 in association with the processing information for the series of processes. The continuous execution management unit 105 instructs the file processing unit 103 to automatically execute the processes up to the stop location in succession among the plurality of processes to be executed in succession, in a predetermined order. In other words, the continuous execution management unit 105 instructs the file processing unit 103 not to automatically execute a process that is not included up to the stop location, among the plurality of processes executed continuously.

Further, the continuous execution management unit 105 may set a pause location for temporarily stopping the series of processes based on the request information of the user. The continuous execution management unit 105 automatically executes the processes up to the pause location among the plurality of processes to be executed in succession, in succession in a predetermined order, and instructs the file processing unit 103 not to automatically execute the process that is not included up to the pause location until a condition for resuming is satisfied. The "condition for resuming" includes, for example, a specific operation by the user, such as an operation in which an instruction for resuming the series of processes is accepted from the user, or an operation in which the user checks contents of a file that is a target of the series of processes, and the like.

In addition, the continuous execution management unit 105 may set a start location for starting the series of processes based on the request information of the user. The continuous execution management unit 105 instructs file processing unit 103 not to automatically execute a process of a stage preceding the start location among the plurality of processes to be executed continuously, and to automatically execute the plurality of processes from the start location in a predetermined order in succession.

Further, the continuous execution management unit 105 may instruct the file processing unit 103 not to automatically execute a process up to the stop location among the plurality of processes in a case where a predetermined condition is satisfied. The predetermined condition includes, for example, a case in which a file does not correspond to an execution condition for a process, a case in which the file is a single process that is not included in the series of processes, and the like. This "single process" is a process to be executed in a case where an execution instruction is individually accepted from a user, and is a process that is not automatically executed continuously with other processes.

For example, in a case where a single process exists in the process up to the stop location among the plurality of processes, the continuous execution management unit 105 instructs the file processing unit 103 to automatically execute processes in succession, which are processes up to the stop location among the plurality of processes and are different from the single process, in a predetermined order. In addition, for example, in a case where a single process exists in the process up to the stop location among the plurality of processes, the continuous execution management unit 105 may instruct the file processing unit 103 to stop the automatic execution before the single process.

The file storage unit 106 stores and accumulates information on a file acquired by the file acquisition unit 101 or a file processed by the file processing unit 103.

The processing information storage unit 107 stores information on the process executed by the file processing unit 103. Specifically, the processing information storage unit 107 stores information indicating a location such as a stop location managed by the continuous execution management unit 105, in addition to the processing information or the image data managed by the processing information management unit 104.

The user information storage unit 108 stores the user information on the user who uses the file management service. The user information includes, for example, information capable of identifying a user, such as a user name.

### (Display Example in Display Unit 25)

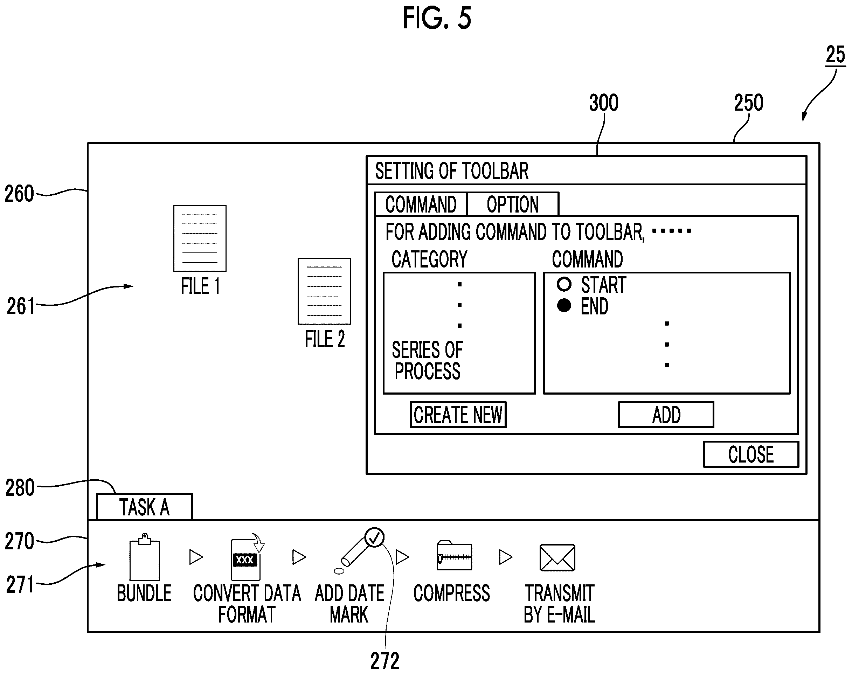

Fig. 5 is a diagram illustrating an example of a display example in the display unit 25 to which the present exemplary embodiment is applied.

In the example illustrated in Fig. 5, an operation screen 250 for accepting an operation of a user who uses a file management service is displayed on the display unit 25 to which the present exemplary embodiment is applied. The operation screen 250 includes a workspace 260 on so-called file handling software and a toolbar 270 representing a command for a file. The file handling software is software that manages a digitized file, and has a function of promoting centralized management of paper and electronic files. Further, on the operation screen 250, a toolbar setting screen 300 that accepts a setting of the toolbar 270 from the user is displayed.

A pointer image that moves according to an operation such as a mouse by the user may be displayed on the operation screen 250.

The workspace 260 is a region in which a file icon 261 and the like corresponding to a file and representing the file are displayed. In the display example illustrated in Fig. 5, various file icons 261 provided for each corresponding file are displayed. The file corresponding to the file icon 261 is, for example, a target of a process of a command included in the toolbar 270.

The workspace 260 also functions as a region for displaying contents of a file in a case where the file is used.

The toolbar 270 is a region in which information on the command executed on the file is displayed. In other words, the toolbar 270 is a region in which a flow of a series of operations performed by the user by using the file management service is displayed.

In the display example illustrated in Fig. 5, the toolbar 270 represents a workflow of a task performed by the user by using the file management service, and a tab 280 indicating a name "task A" of the task is displayed in association with the toolbar 270. The region in which the workflow is displayed may be provided for each task. In a case where a plurality of tasks are set, the tab 280 is displayed for each task, and the tab 280 may accept an instruction from a user to display a workflow of the corresponding task on the toolbar 270.

A button image corresponding to the command executed on the file is displayed on the toolbar 270. In the display example illustrated in Fig. 5, various processing buttons 271 corresponding to the process of the command are displayed in one direction. Specifically, on the toolbar 270, as a process of constituting the task, a plurality of processing buttons 271 including a bundling process of bundling a plurality of files into one, a conversion process of converting a data format of the file into a data format such as a portable document format (PDF) (registered trademark), an addition process of adding a date mark as an annotation to a file body, a compression process of compressing data of the file, and a transmission process of transmitting the file by e-mail are displayed in one direction.

The processing button 271 corresponds to a process of a command that can be set from the toolbar setting screen 300 or a menu bar (not illustrated). The processing button 271 is displayed in an identifiable state for each process of the command. For example, the processing button 271 is configured with an image and a text indicating contents of the corresponding process. The image or the text constituting the processing button 271 may be changed by a detailed setting of the process. The display mode of the processing button 271, the contents of the process corresponding to the processing button 271, and the like may be customized by the user.

Further, the processing button 271 is a button image for accepting an instruction from the user to execute the corresponding process on the file. For example, in a case where the processing button 271 corresponding to a process of compressing data of the file is selected, the process of compressing the data of the file is executed.

In addition, various types of processing corresponding to each of the processing buttons 271 included in the toolbar 270 may be executed as a series of processes. In other words, a plurality of processes corresponding to the plurality of processing buttons 271 included in the toolbar 270 may be executed as the series of processes. In the present exemplary embodiment, in a case where the user instructs to start the series of processes, the plurality of processes corresponding to the plurality of processing buttons 271 are automatically executed in succession in accordance with an arrangement order of the plurality of processing buttons 271. Specifically, in a case where the user instructs to start the series of processes, a data format is converted after bundling a plurality of files into one, data is obtained by adding a date mark to a file body in the converted data format, and a file obtained by compressing the data is transmitted by e-mail.

In a case where the plurality of processes corresponding to the plurality of processing buttons 271 included in the toolbar 270 are executed as the series of processes, a notification image 272 that notifies a progress situation of the series of processes may be displayed in association with the processing button 271 corresponding to the currently automatically executed process or the processing button 271 corresponding to the last automatically executed process.

The toolbar setting screen 300 accepts a setting of a command for displaying information on the toolbar 270 and the like, from the user. The command is illustrated for each category on the toolbar setting screen 300. The command includes, in addition to a process corresponding to the processing button 271, a start or an end of the series of processes, and the like.

As a setting of the command, for example, in a state where the command is designated on the toolbar setting screen 300, the user selects an add button, thereby accepting an instruction to add the command to the toolbar 270. In addition, the user moves the command from the toolbar setting screen 300 to the toolbar 270 by, for example, dragging and dropping or the like, so that an instruction to add the command to the toolbar 270 is accepted.

Further, as the setting of the command, for example, by inputting by the user on an option page of the toolbar setting screen 300, not only contents of the command but also a detailed setting for each command, a setting of a condition for a file to which the command is applied, or the like are also accepted.

In addition, the toolbar setting screen 300 may accept an instruction to newly provide a region in which the processing button 271 is displayed on the operation screen 250, for example, by selecting a new creation button on the toolbar setting screen 300 by the user.

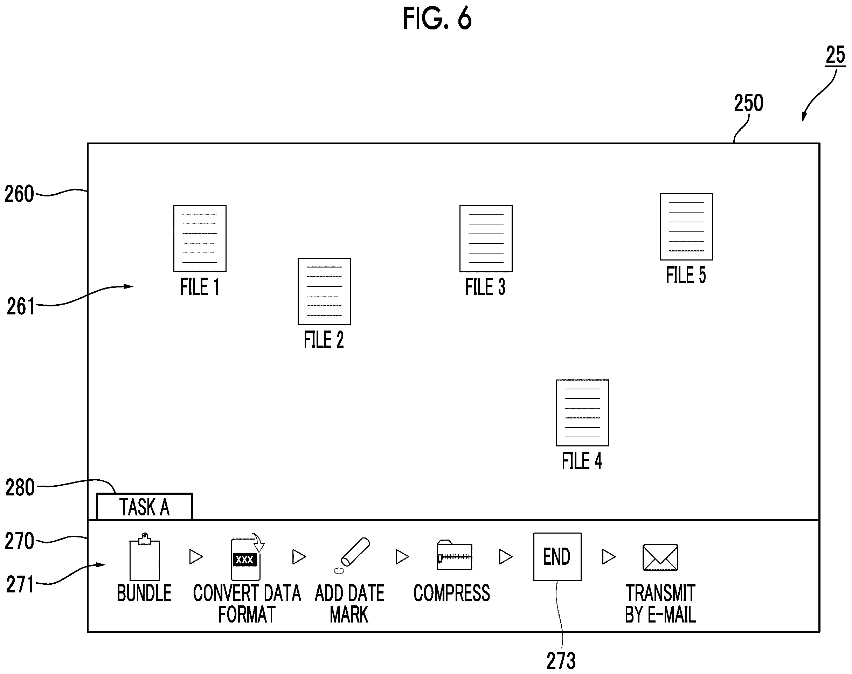

Fig. 6 is a diagram illustrating an example of a display example of the toolbar 270 to which the present exemplary embodiment is applied.

In the display example illustrated in Fig. 6, the processing buttons 271 and an end button 273 indicating a location where a series of processes are to be ended are displayed on the toolbar 270.

The end button 273 as an example of a stop display element is a button image corresponding to a stop location of the series of processes. The end button 273 is displayed in the toolbar 270 in a state of being arranged with the processing buttons 271. The end button 273 may include a text, as well as an image indicating that the series of processes is ended. A display mode of the end button 273, a condition for ending the series of processes corresponding to the end button 273, or the like may be customized by a user.

In the display example illustrated in Fig. 6, the end button 273 is displayed in association with the processing button 271 corresponding to a compression process among the various processing buttons 271. In a case where a plurality of processes corresponding to the plurality of processing buttons 271 are executed as the series of processes, it is illustrated that the series of processes is ended after the compression process. In other words, in a case where the plurality of processes corresponding to the plurality of processing buttons 271 are executed as the series of processes, it is illustrated that the series of processes is ended before a transmission process is automatically executed.

In the present exemplary embodiment, in a case where the user instructs to start the series of processes, among the plurality of processes corresponding to the plurality of processing buttons 271, processes corresponding to the processing buttons 271 included up to the processing button 271 with which the end button 273 is associated are executed in succession. Specifically, a bundling process, a conversion process, an addition process, and the compression process, which correspond to the processing buttons 271 included up to the processing button 271 corresponding to the compression process associated with the end button 273, are executed in succession according to an arrangement order of the processing buttons 271. In addition, the transmission process corresponding to the processing button 271 that is not included up to the processing button 271 corresponding to the compression process associated with the end button 273 is not automatically executed, and the processing button 271 corresponding to the transmission process is separately executed in a case of being selected by the user.

An instruction to start the series of processes is accepted based on selecting a button image (not illustrated) for accepting the instruction to start the series of processes or performing a specific operation on the processing button 271 corresponding to a process to be first executed among the series of processes, and the like.

In addition, in a case where the toolbar 270 includes the processing button 271 corresponding to a single process, even in a case where the single process corresponds to the processing button 271 included up to the processing button 271 associated with the end button 273 among the plurality of processes, the single process may be skipped. For example, in a case where the addition process is a single process, among the plurality of processes, the bundling process, the conversion process, and the compression process, which are processes corresponding to the processing buttons 271 included up to the processing button 271 associated with the end button 273, and are different from the addition process may be automatically executed in succession in accordance with the arrangement order of the processing buttons 271.

In addition, the automatic execution may be stopped before the processing button 271 corresponding to the addition process which is the processing button 271 included up to the processing button 271 associated with the end button 273 and is a single process. In other words, a location before the processing button 271 corresponding to the addition process which is the single process may be a stop location of the series of processes.

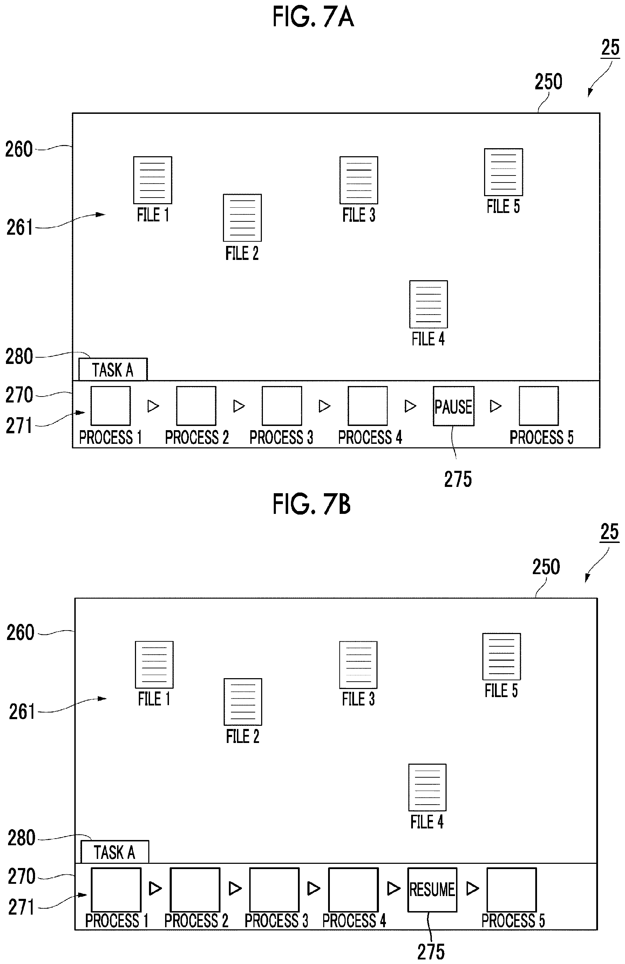

Figs. 7A and 7B are diagrams illustrating another example of the display example of the toolbar 270 to which the present exemplary embodiment is applied, Fig. 7Aillustrates a state before a series of processes is temporarily stopped, and Fig. 7B illustrates a state before the series of processes is resumed.

In the display example illustrated in Fig. 7A, the processing button 271 indicating each of a plurality of processes of "process 1", "process 2", "process 3", "process 4", and "process 5" as processes constituting a task, and a pause and resume button 275 indicating a pause location for temporarily stopping the series of processes are displayed on the toolbar 270 in one direction. For example, the "process 1" is set to a bundling process, the "process 2" is set to a conversion process, the "process 3" is set to an addition process, the "process 4" is set to a compression process, and the "process 5" is set to a transmission process.

The pause and resume button 275 is a button image corresponding to a pause location of the series of processes, and is displayed in the toolbar 270 in a state of being arranged with the processing buttons 271. The display example illustrated in Fig. 7A illustrates that the pause and resume button 275 is displayed in association with the processing button 271 corresponding to the "process 4", and the series of processes is temporarily stopped before the "process 5" is automatically executed in succession.

In the present exemplary embodiment, in a case where a user instructs to start the series of processes, in the same manner as the above description, a process corresponding to the processing button 271 included up to the processing button 271 associated with the pause and resume button 275 among the plurality of processes is executed in succession. Further, the automatic execution of the transmission process, which is the "process 5" corresponding to the processing button 271 which is not included up to the processing button 271 corresponding to the compression process which is the "process 4" associated with the pause and resume button 275 is temporarily stopped. In a case where the series of processes is temporarily stopped, the display of the pause and resume button 275 is switched as illustrated in Fig. 7B.

In a case where the series of processes is temporarily stopped, the pause and resume button 275 accepts an instruction from the user to resume the automatic execution of the temporarily stopped process among the plurality of processes. In other words, the pause and resume button 275 is a button image that accepts, from the user, an instruction to automatically execute the temporarily stopped process among the plurality of processes, in succession according to an arrangement order of the processing buttons 271.

The pause and resume button 275 is an example of a stop display element. Further, the pause and resume button 275 is an example of a resume instruction image. In a state where the stop display element is displayed, the resume instruction image may be displayed on the operation screen 250 separately from the stop display element.

In the present exemplary embodiment, in a case where the user selects the pause and resume button 275, the transmission process which is the temporarily stopped "process 5" is executed. Specifically, in a case where the user instructs to start the series of processes, a data format is converted after bundling a plurality of files into one, data is obtained by adding a date mark to a file body in the converted data format, and a file obtained by compressing the data is not transmitted by e-mail until the user selects the pause and resume button 275.

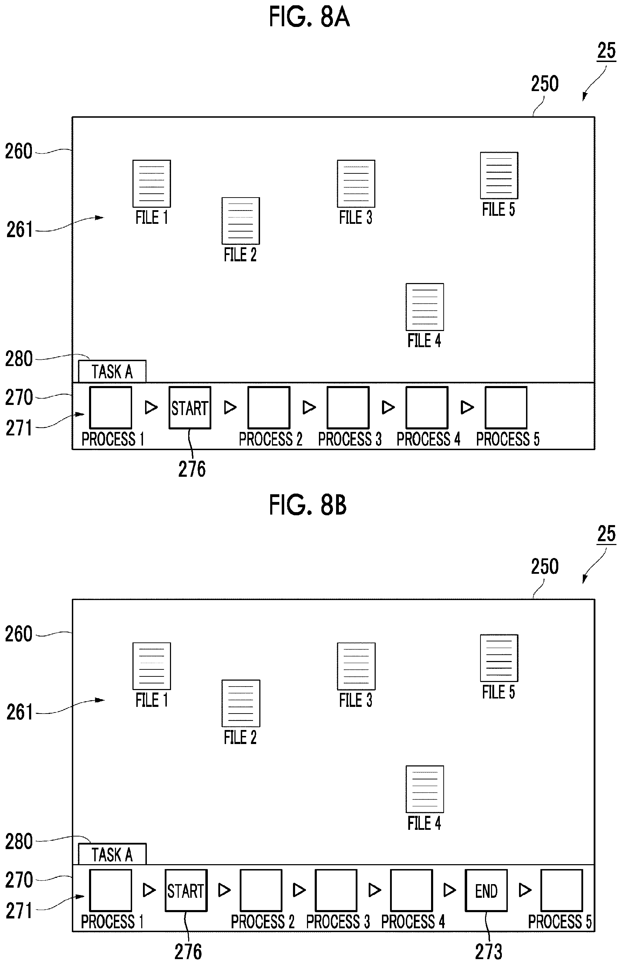

Figs. 8A and 8B are diagrams illustrating still another example of the display example of the toolbar 270 to which the present exemplary embodiment is applied, Fig. 8A illustrates a case where a start location is included, and Fig. 8B illustrates a case where the start location and a stop location are included.

In the display example illustrated in Fig. 8A, the processing button 271 indicating each of a plurality of processes of "process 1", "process 2", "process 3", "process 4", and "process 5" as processes constituting a task, and a start button 276 indicating a start location for starting a series of processes are displayed on the toolbar 270 in one direction. For example, the "process 1" is set to a bundling process, the "process 2" is set to a conversion process, the "process 3" is set to an addition process, the "process 4" is set to a compression process, and the "process 5" is set to a transmission process.

The start button 276 as an example of a start display element is a button image corresponding to a start location of the series of processes, and is displayed in a state of being arranged with the processing buttons 271 in the toolbar 270. In addition, the start button 276 may accept an instruction to start the series of processes from a user.

The example illustrated in Fig. 8A illustrates that the start button 276 is displayed in association with the processing button 271 corresponding to the "process 2", and the series of processes is started from the conversion process as the "process 2".

In the present exemplary embodiment, in a case where the user instructs to start the series of processes, a process corresponding to the processing button 271 included in and after the processing button 271 associated with the start button 276 among the plurality of processes is automatically executed in succession. In addition, the bundling process that is the "process 1" corresponding to the processing button 271 at a stage before the processing button 271 corresponding to the "process 2" associated with the start button 276 is not executed. Specifically, in a case where the user instructs to start the series of processes, a data format of a file is converted, data is obtained by adding a date mark to a file body in the converted data format, and a file obtained by compressing the data is transmitted by e-mail.

In the display example illustrated in Fig. 8B, the processing buttons 271, the end button 273, and the start button 276 are displayed on the toolbar 270. In the example illustrated in Fig. 8B, the start button 276 is displayed in association with the processing button 271 corresponding to the "process 2", and the end button 273 is displayed in association with the processing button 271 corresponding to the "process 4". From the start button 276 and the end button 273, it is illustrated that the series of processes is started from the conversion process which is the "process 2" and is ended after the compression process which is the "process 4".

In the present exemplary embodiment, in a case where the user instructs to start the series of processes, among the plurality of processes, processes corresponding to the processing buttons 271 included from the processing button 271 associated with the start button 276 to the processing button 271 associated with the end button 273 are executed in succession. Further, the "process 1" corresponding to the processing button 271 at a stage before the processing button 271 corresponding to the "process 2" associated with the start button 276 and the "process 5" corresponding to the processing button 271 that is not included up to the processing buttons 271 corresponding to the "process 4" associated with the end button 273 are not automatically executed. Specifically, in a case where the user instructs to start the series of processes, a data format of a file is converted, data is obtained by adding a date mark to a file body in the converted data format, the data of the file is compressed, and the automatic execution is ended.

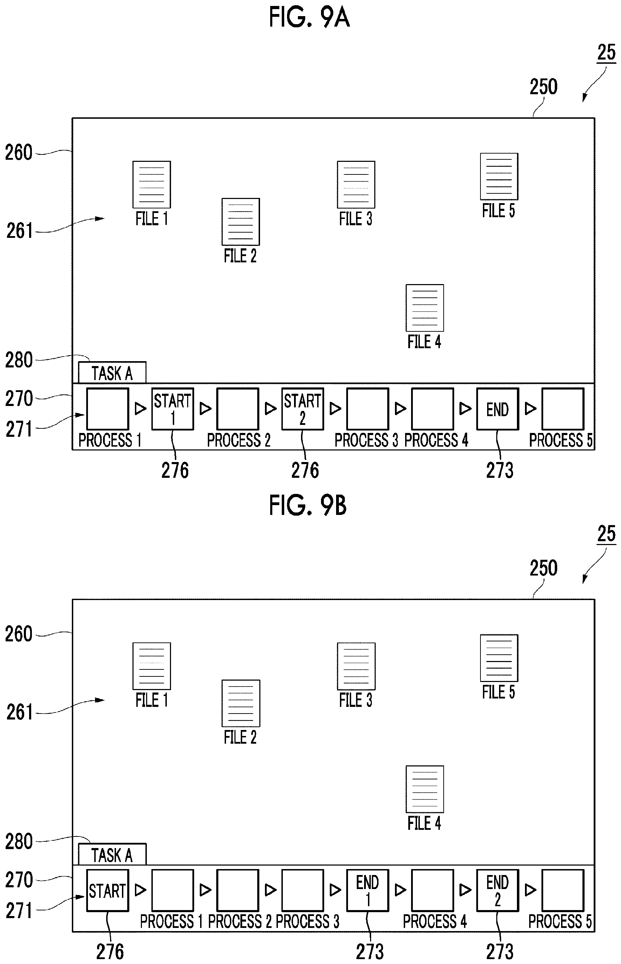

Figs. 9A and 9B are diagrams illustrating still another example of the display example of the toolbar 270 to which the present exemplary embodiment is applied, Fig. 9A illustrates a case where a plurality of start locations are included, and Fig. 9B illustrates a case where a plurality of stop locations are included.

In the display example illustrated in Fig. 9A, the processing button 271 indicating each of a plurality of processes of "process 1", "process 2", "process 3", "process 4", and "process 5" as processes constituting a task, the end button 273 as an example of a stop location, and a plurality of start buttons 276 are displayed on the toolbar 270 in one direction. For example, the "process 1" is set to a bundling process, the "process 2" is set to a conversion process, the "process 3" is set to an addition process, the "process 4" is set to a compression process, and the "process 5" is set to a transmission process.

Each of the plurality of start buttons 276 has a different display mode as illustrated in "start 1" and "start 2" illustrated in Fig. 9A. The display mode of the start button 276 is automatically changed in a case where a plurality of start locations are set by a user, and for example, a number based on an arrangement order of the start buttons 276 is assigned.

In the example illustrated in Fig. 9A, the start button 276 of "start 1" is displayed in association with the processing button 271 corresponding to the "process 2", and the start button 276 of "start 2" corresponds to the "process 3" is displayed in association with the processing button 271. The start button 276 of the "start 2" is included from the start button 276 of the "start 1" to the end button 273.

In the present exemplary embodiment, in a case where the user instructs to start a series of processes, among the plurality of processes, processes corresponding to the processing buttons 271 included from the processing button 271 associated with the start button 276 of the "start 1" to the processing button 271 associated with the end button 273 are executed in succession according to an arrangement order of the corresponding processing buttons 271. Specifically, in a case where the user instructs to start a series of processes from the "process 2" corresponding to the processing button 271 associated with the start button 276 of "start 1", a data format of a file is converted, data is obtained by adding a date mark to a file body in the converted data format, the data of the file is compressed, and the automatic execution is ended.

In the present exemplary embodiment, in a case where the user instructs to start the series of processes, among the plurality of processes, processes corresponding to the processing buttons 271 included from the processing button 271 associated with the start button 276 of "start 1" to the processing button 271 associated with the start button 276 of "start 2" may be executed in succession. Specifically, in a case where the user instructs to start a series of processes from the "process 2" corresponding to the processing button 271 associated with the start button 276 of "start 1", the data format of the file may be converted and the automatic execution may be ended, and the addition process, the compression process, or the transmission process may not be automatically executed in succession.

In the display example illustrated in Fig. 9B, the processing buttons 271, a plurality of end buttons 273, and a start button 276 are displayed on the toolbar 270.

In the example illustrated in Fig. 9B, each of the plurality of end buttons 273 has a different display mode such as "end 1" and "end 2". In the same manner as the display mode of the start button 276 illustrated in Fig. 9A, the display mode of the end button 273 is automatically changed in a case where a plurality of stop locations are set by the user.

In the example illustrated in Fig. 9B, the end button 273 of "end 1" is displayed in association with the processing button 271 corresponding to the "process 3", and the end button 273 of "end 2" is displayed in association with the processing button 271 corresponding to the "process 4". The end button 273 of "end 1" is included in a stage before the end button 273 of "end 2".

In the present exemplary embodiment, in a case where the user instructs to start the series of processes, among the plurality of processes, processes corresponding to the processing buttons 271 included from the processing button 271 associated with the start button 276 to the processing button 271 associated with the end button 273 of "end 1" are executed in succession.

In a case where a file as a target of the series of processes does not satisfy a predetermined condition after the execution of the process corresponding to the processing button 271 associated with the end button 273 of the "end 1", processes corresponding to the processing buttons 271 included up to the processing button 271 associated with the end button 273 of "end 2" are executed in succession. Specifically, in a case where a data format, a format mode, or the like of a file on which the bundling process, the conversion process, and the addition process are automatically executed in succession satisfies an execution condition for the compression process of the "process 4", the process after the compression process is also automatically executed in succession.

On the other hand, in a case where the file as a target of the series of processes satisfies the predetermined condition after the execution of the process corresponding to the processing button 271 associated with the end button 273 of the "end 1", a process corresponding to the processing button 271 that is not included up to the processing button 271 associated with the end button 273 of the "end 1" is not automatically executed. Specifically, in a case where the file on which the bundling process, the conversion process, and the addition process are automatically executed in succession does not satisfy the execution condition for the process in the subsequent stage, the process after the compression process of the "process 4" is not automatically executed. Further, the automatic execution of the process after the compression process of the "process 4" may be temporarily stopped and then resumed. In other words, the temporarily stopped process after the compression process of the "process 4" may be automatically executed in succession according to the arrangement order of the processing buttons 271.

In addition, a set of a start location and a stop location may be set in a state where the processing button 271, the plurality of end buttons 273, and the plurality of start buttons 276 are displayed on the toolbar 270.

For example, a case is assumed in which a set of "start 1" and "end 1" and a set of "start 2" and "end 2" are set. In a case where a series of processes is started from "start 1", "start 2" is skipped even in a case where "start 2" is included up to "end 1", and a process corresponding to the processing button 271 included up to the processing button 271 associated with "end 1" is executed in succession. Further, in a case where a series of processes are started from "start 2", "end 1" is skipped even in a case where "end 1" is included up to "end 2", and a process corresponding to the processing button 271 included up to the processing button 271 associated with "end 2" is executed in succession.

### (Flow of Processes)

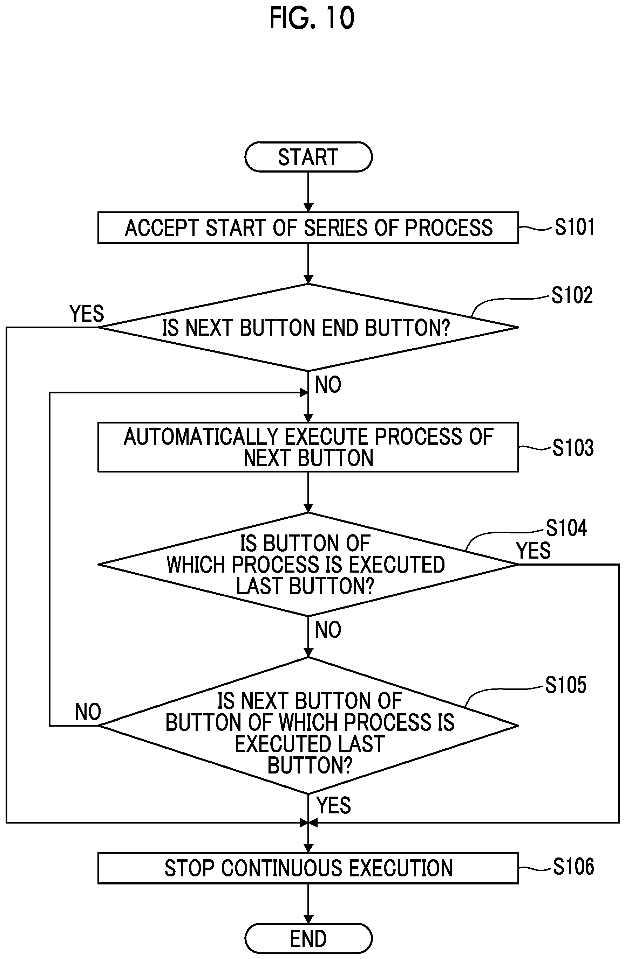

Fig. 10 is a flowchart illustrating a flow of a series of processes according to the present exemplary embodiment.

Fig. 10 illustrates a case where a user instructs to start the series of processes in a state where the end button 273 (see Fig. 6) is displayed on the toolbar 270.

First, the management server 10 accepts the start of the series of processes (S101). Specifically, the continuous execution management unit 105 accepts an instruction of executing a plurality of processes corresponding to various processing buttons 271 (see Fig. 6) displayed on the toolbar 270 as the series of processes, based on request information acquired by the request information acquisition unit 102.

The management server 10 specifies whether or not the next button is an end button (S102). Specifically, the continuous execution management unit 105 specifies whether or not the next button displayed in one direction on the toolbar 270 is the end button 273.

In a case where the next button is not the end button (NO in S102), the management server 10 automatically executes a process of the next button (S103). Specifically, the continuous execution management unit 105 instructs the file processing unit 103 to automatically execute the process corresponding to the next processing button 271 displayed in one direction on the toolbar 270. The file processing unit 103 executes the process instructed by the continuous execution management unit 105.

Next, the management server 10 specifies whether or not the button of which the process is executed is the last button (S104). Specifically, the continuous execution management unit 105 specifies whether or not the processing button 271 of which the process is executed is the last button displayed in one direction on the toolbar 270.

In a case where the button of which the process is executed is not the last button (NO in S 104), the management server 10 specifies whether or not a button next to the button of which the process is executed is the end button (S105). Specifically, the continuous execution management unit 105 specifies whether or not the button, which is displayed in one direction on the toolbar 270 and is next to the processing button 271 of which the process is executed is the end button 273.

In a case where the button next to the button of which the process is executed is not the end button (NO in S105), the management server 10 automatically executes a process of the next button (S103).

In S105, in a case where the button next to the button of which the process is executed is the end button (YES in S105), the management server 10 stops the continuous execution (S106), and ends the process. Specifically, the continuous execution management unit 105 instructs the file processing unit 103 to automatically execute a process corresponding to the processing button 271 included up to the processing button 271 associated with the end button 273 among the processing buttons 271 displayed in one direction on the toolbar 270. Further, the continuous execution management unit 105 instructs the file processing unit 103 not to automatically execute a process corresponding to the processing button 271 that is not included up to the processing button 271 associated with the end button 273. The file processing unit 103 executes the process corresponding to the processing button 271 included up to the processing button 271 associated with the end button 273, and ends the process.

In S102, in a case where the next button is the end button (YES in S102), the management server 10 stops the continuous execution (S106), and ends the process.

Further, in S104, in a case where the button of which the process is executed is the last button (YES in S104), the management server 10 stops the continuous execution (S106), and ends the process. Specifically, the continuous execution management unit 105 stops the continuous execution with the completion of the series of processes, and ends the processing.

### (Modification Example)

In the example described above, the notification of a location such as a stop location managed by the continuous execution management unit 105 is realized by a button image displayed side by side in one direction with the processing buttons 271, and the present example is not limited thereto. For example, the notification of the location such as the stop location managed by the continuous execution management unit 105 may be performed in the processing button 271 itself.

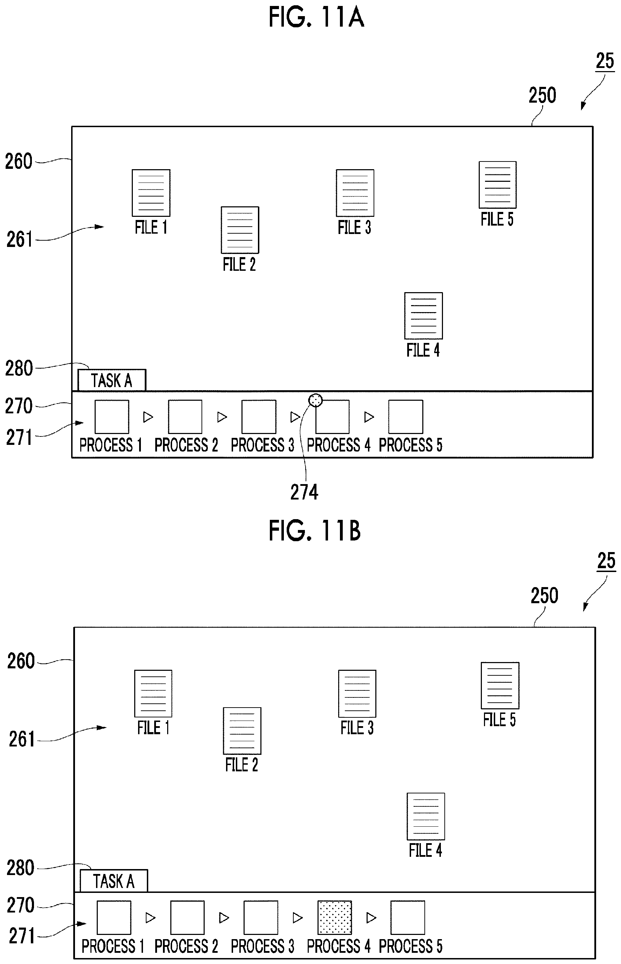

Figs. 11A and 11B are diagrams illustrating still another example of the display example of the toolbar 270 to which the present exemplary embodiment is applied, Fig. 11A illustrates a case where an end badge image 274 is displayed, and Fig. 11B illustrates a case where a processing button 271 associated with a stop location is highlighted. For example, a "process 1" is set to a bundling process, a "process 2" is set to a conversion process, a "process 3" is set to an addition process, a "process 4" is set to a compression process, and a "process 5" is set to a transmission process.

In the display example illustrated in Fig. 11A, the processing buttons 271 and the end badge image 274 indicating a process at which a series of processes is to be ended are displayed on the toolbar 270.

The end badge image 274 as an example of a stop display element is displayed in association with the processing button 271 corresponding to a process executed before the series of processes is stopped. In the display example illustrated in Fig. 11A, the end badge image 274 is displayed in association with the processing button 271 corresponding to the compression process, which is the "process 4". In a case where a plurality of processes corresponding to the plurality of processing buttons 271 are executed as the series of processes, it is illustrated that the series of processes is ended at the compression process.

The image indicating the process of ending the series of processes is not limited to the end badge image 274, and any image may be used as long as the process of ending the series of processes is an identifiable image. For example, a message notifying that the series of processes is to be ended may be displayed in association with the processing button 271 corresponding to the processes executed before the series of processes is stopped. Further, for example, an image surrounding the processing button 271 corresponding to the process executed before the series of processes is stopped may be displayed.

In the display example illustrated in Fig. 11B, a display mode of the processing button 271 corresponding to the process executed before the series of processes is stopped is different from display modes of the other processing buttons 271. For example, a background color of the processing button 271 corresponding to the compression process which is the "process 4" executed before the series of processes is stopped is different from background colors of the other processing buttons 271.

The exemplary embodiment is not limited to the example illustrated in Fig. 11B, and the processing button 271 corresponding to the process executed before the series of processes is stopped may be highlighted, for example, the processing button 271 corresponding to the process executed before the series of processes is stopped may be made to blink.

The processing performed by the information processing system in each exemplary embodiment is prepared as, for example, a program such as application software. The program executed by the CPU 11a (see Fig. 2) as an example of the processor in each exemplary embodiment may be provided in a state of being stored in a computer readable recording medium, such as a magnetic recording medium (magnetic tape, magnetic disk, or the like), an optical recording medium (optical disk or the like), an optical magnetic recording medium, or a semiconductor memory. The program executed by the CPUs 11a and 21a may be provided by using a communication section such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

### Supplementary Note

(((1))) An information processing system comprising:
   one or a plurality of processors configured to:
   display a processing button indicating each of a plurality of processes to be executed on a file in one direction on a display unit, and in a case where the plurality of processes corresponding to a plurality of processing buttons are executed as a series of processes, display a stop display element indicating a stop location at which the series of processes is to be stopped, in association with the processing button; and
   in a case where an instruction to execute the series of processes is accepted from a user, automatically execute a process among the plurality of processes, corresponding to the processing button included up to the processing button associated with the stop display element, in succession according to an arrangement order of the processing buttons.
(((2))) The information processing system according to (((1))), wherein the one or plurality of processors are configured to:
   in a case where the instruction to execute the series of processes is accepted from the user, not automatically execute a process corresponding to the processing button that is not included up to the processing button associated with the stop display element.
(((3))) The information processing system according to (((1))), wherein the one or plurality of processors are configured to:
   in a case where the instruction to execute the series of processes is accepted from the user, temporarily stop a process corresponding to the processing button that is not included up to the processing button associated with the stop display element.
(((4))) The information processing system according to (((3))), wherein the one or plurality of processors are configured to:
   in a case where a condition for resuming is satisfied, automatically execute the temporarily stopped process among the plurality of processes in succession according to the arrangement order of the processing buttons.
(((5))) The information processing system according to (((3))), wherein the one or plurality of processors are configured to:
   in a case where the process corresponding to the processing button that is not included up to the processing button associated with the stop display element is temporarily stopped, display a resume instruction image for accepting an instruction to resume automatic execution on the temporarily stopped process among the plurality of processes from the user, on the display unit.
(((6))) The information processing system according to any one of (((1))) to (((5))), wherein the one or plurality of processors are configured to:
   display a start display element indicating a start location at which the series of processes is to be started, in association with the processing button; and
   in a case where the instruction to execute the series of processes is accepted from the user, automatically execute a process among the plurality of processes, corresponding to the processing button included from the processing button associated with the start display element to the processing button associated with the stop display element, in succession according to the arrangement order of the processing buttons.
(((7))) The information processing system according to (((6))), wherein the one or plurality of processors are configured to:
   in a case where the instruction to execute the series of processes is accepted from the user in a state in which a plurality of start display elements exist and one start display element is included after another start display element before the stop display element, automatically execute a process among the plurality of processes, corresponding to the processing button included from the processing button associated with the other start display element to the processing button associated with the stop display element, in succession according to the arrangement order of the processing buttons.
(((8))) The information processing system according to (((6))), wherein the one or plurality of processors are configured to:
   in a case where the instruction to execute the series of processes is accepted from the user in a state in which a plurality of start display elements exist and one start display element is included after another start display element before the stop display element, automatically execute a process among the plurality of processes, corresponding to the processing button included from the processing button associated with the other start display element to the processing button associated with the one start display element, in succession according to the arrangement order of the processing buttons.
(((9))) The information processing system according to any one of (((1))) to (((8))), wherein the one or plurality of processors are configured to:
   in a case where the instruction to execute the series of processes is accepted from the user in a state in which a plurality of the stop display elements exist and one stop display element is included before another stop display element, automatically execute a process among the plurality of processes, corresponding to the processing button included up to the processing button associated with the other stop display element, in succession according to an arrangement order of the processing buttons.
(((10))) The information processing system according to (((9))), wherein the one or plurality of processors are configured to:
   in a case where a predetermined condition is satisfied, automatically execute a process corresponding to the processing button included up to the processing button associated with the one stop display element, in succession according to the arrangement order of the processing buttons, and not automatically execute a process corresponding to the processing button that is not included up to the processing button associated with the one stop display element, among the plurality of processes.
(((11))) The information processing system according to (((10))), wherein the one or plurality of processors are configured to:
   in a case where the predetermined condition is satisfied, temporarily stop and then, automatically execute a process among the plurality of processes, corresponding to the processing button from the processing button associated with the one stop display element to the processing button associated with the other stop display element, in succession according to the arrangement order of the processing buttons.
(((12))) The information processing system according to any one of (((1))) to (((11))), wherein the one or plurality of processors are configured to:
   in a case where the instruction to execute the series of processes is accepted from the user in a state in which the plurality of processes include a single process that is not included in the series of processes, automatically execute a process among the plurality of processes, that corresponds to the processing button included up to the processing button associated with the stop display element, and is different from the single process, in succession according to the arrangement order of the processing buttons.
(((13))) A program causing a computer to realize:
   a function of displaying a processing button indicating each of a plurality of processes to be executed on a file in one direction on a display unit, and displaying, in a case where the plurality of processes corresponding to a plurality of processing buttons are executed as a series of processes, a stop display element indicating a stop location at which the series of processes is to be stopped, in association with the processing button; and
   a function of automatically executing, in a case where an instruction to execute the series of processes is accepted from a user, a process among the plurality of processes, corresponding to the processing button included up to the processing button associated with the stop display element, in succession according to an arrangement order of the processing buttons.

According to the disclosure of (((1))) and (((13))), it is possible to stop the series of processes on a file at a location required by the user.

According to the disclosure of (((2))), it is possible to avoid execution of a process unrequired by the user, among the series of processes on the file.

According to the disclosure of (((3))), it is possible to temporarily stop the series of processes at a location required by the user.

According to the disclosure of (((4))), in a case of executing the temporarily stopped process among the series of processes on the file, it is possible to improve efficiency of work of resuming the series of processes, as compared with a configuration in which an instruction of the user is required for each process.

According to the disclosure of (((5))), it is possible to improve efficiency of work of completing the plurality of processes, as compared with a configuration in which an execution instruction is accepted from the user for each processing button corresponding to the temporarily stopped process.

According to the disclosure of (((6))), it is possible to start the series of processes on the file from a location required by the user.

According to the disclosure of (((7))), as compared with a configuration in which automatic execution of the processes on the file is stopped at each start location, it is possible to improve efficiency of work of executing a subsequent process from a location required by the user for the series of processes on the file.

According to the disclosure of (((8))), it is possible to improve efficiency of work of completing the series of processes while checking the file at a location required by the user, as compared with a configuration in which the series of processes on the file is stopped only at a stop location.

According to the disclosure of (((9))), it is possible to improve efficiency of work of completing the plurality of processes on the file, as compared with a configuration in which automatic execution of the process on the file is stopped at each stop location.

According to the disclosure of (((10))), it is possible to improve accuracy of the series of processes on the file, as compared with a configuration in which the series of processes on the file is not uniformly stopped at an upstream stop location.

According to the disclosure of (((11))), in a case where the series of processes on the file is stopped at the upstream stop location, it is possible to improve efficiency of work of completing the series of processes, as compared with a configuration in which the execution of the series of processes is stopped, and a subsequent process from the stop location is not executed.

According to the disclosure of (((12))), it is possible to improve efficiency of work of executing the processes required by the user as the series of processes, as compared with a configuration in which the execution of the series of processes is stopped at an order of the processing button corresponding to the process that is not included in the series of processes on the file.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: information processing system
10: management server
11a: CPU
20: user terminal
25: display unit
101: file acquisition unit
102: request information acquisition unit
103: file processing unit
104: processing information management unit
105: continuous execution management unit
106: file storage unit
107: processing information storage unit
108: user information storage unit
250: operation screen
261: file icon
270: toolbar
271: processing button
273: end button
275: pause and resume button
276: start button

## Claims

1. An information processing system comprising:
one or a plurality of processors configured to:
display a processing button indicating each of a plurality of processes to be executed on a file in one direction on a display unit, and in a case where the plurality of processes corresponding to a plurality of processing buttons are executed as a series of processes, display a stop display element indicating a stop location at which the series of processes is to be stopped, in association with the processing button; and
in a case where an instruction to execute the series of processes is accepted from a user, automatically execute a process among the plurality of processes, corresponding to the processing button included up to the processing button associated with the stop display element, in succession according to an arrangement order of the processing buttons.

2. The information processing system according to claim 1, wherein the one or plurality of processors are configured to:
in a case where the instruction to execute the series of processes is accepted from the user, not automatically execute a process corresponding to the processing button that is not included up to the processing button associated with the stop display element.

3. The information processing system according to claim 1, wherein the one or plurality of processors are configured to:
in a case where the instruction to execute the series of processes is accepted from the user, temporarily stop a process corresponding to the processing button that is not included up to the processing button associated with the stop display element.

4. The information processing system according to claim 3, wherein the one or plurality of processors are configured to:
in a case where a condition for resuming is satisfied, automatically execute the temporarily stopped process among the plurality of processes in succession according to the arrangement order of the processing buttons.

5. The information processing system according to claim 3, wherein the one or plurality of processors are configured to:
in a case where the process corresponding to the processing button that is not included up to the processing button associated with the stop display element is temporarily stopped, display a resume instruction image for accepting an instruction to resume automatic execution on the temporarily stopped process among the plurality of processes from the user, on the display unit.

6. The information processing system according to any one of claims 1 to 5, wherein the one or plurality of processors are configured to:
display a start display element indicating a start location at which the series of processes is to be started, in association with the processing button; and
in a case where the instruction to execute the series of processes is accepted from the user, automatically execute a process among the plurality of processes, corresponding to the processing button included from the processing button associated with the start display element to the processing button associated with the stop display element, in succession according to the arrangement order of the processing buttons.

7. The information processing system according to claim 6, wherein the one or plurality of processors are configured to:
in a case where the instruction to execute the series of processes is accepted from the user in a state in which a plurality of start display elements exist and one start display element is included after another start display element before the stop display element, automatically execute a process among the plurality of processes, corresponding to the processing button included from the processing button associated with the other start display element to the processing button associated with the stop display element, in succession according to the arrangement order of the processing buttons.

8. The information processing system according to claim 6, wherein the one or plurality of processors are configured to:
in a case where the instruction to execute the series of processes is accepted from the user in a state in which a plurality of start display elements exist and one start display element is included after another start display element before the stop display element, automatically execute a process among the plurality of processes, corresponding to the processing button included from the processing button associated with the other start display element to the processing button associated with the one start display element, in succession according to the arrangement order of the processing buttons.

9. The information processing system according to any one of claims 1 to 8, wherein the one or plurality of processors are configured to:
in a case where the instruction to execute the series of processes is accepted from the user in a state in which a plurality of the stop display elements exist and one stop display element is included before another stop display element, automatically execute a process among the plurality of processes, corresponding to the processing button included up to the processing button associated with the other stop display element, in succession according to an arrangement order of the processing buttons.

10. The information processing system according to claim 9, wherein the one or plurality of processors are configured to:
in a case where a predetermined condition is satisfied, automatically execute a process corresponding to the processing button included up to the processing button associated with the one stop display element, in succession according to the arrangement order of the processing buttons, and not automatically execute a process corresponding to the processing button that is not included up to the processing button associated with the one stop display element, among the plurality of processes.

11. The information processing system according to claim 10, wherein the one or plurality of processors are configured to:
in a case where the predetermined condition is satisfied, temporarily stop and then, automatically execute a process among the plurality of processes, corresponding to the processing button from the processing button associated with the one stop display element to the processing button associated with the other stop display element, in succession according to the arrangement order of the processing buttons.

12. The information processing system according to any one of claims 1 to 11, wherein the one or plurality of processors are configured to:
in a case where the instruction to execute the series of processes is accepted from the user in a state in which the plurality of processes include a single process that is not included in the series of processes, automatically execute a process among the plurality of processes, that corresponds to the processing button included up to the processing button associated with the stop display element, and is different from the single process, in succession according to the arrangement order of the processing buttons.

13. A program causing a computer to realize:
a function of displaying a processing button indicating each of a plurality of processes to be executed on a file in one direction on a display unit, and displaying, in a case where the plurality of processes corresponding to a plurality of processing buttons are executed as a series of processes, a stop display element indicating a stop location at which the series of processes is to be stopped, in association with the processing button; and
a function of automatically executing, in a case where an instruction to execute the series of processes is accepted from a user, a process among the plurality of processes, corresponding to the processing button included up to the processing button associated with the stop display element, in succession according to an arrangement order of the processing buttons.

14. An information processing method comprising:
displaying a processing button indicating each of a plurality of processes to be executed on a file in one direction on a display unit, and displaying, in a case where the plurality of processes corresponding to a plurality of processing buttons are executed as a series of processes, a stop display element indicating a stop location at which the series of processes is to be stopped, in association with the processing button; and
automatically executing, in a case where an instruction to execute the series of processes is accepted from a user, a process among the plurality of processes, corresponding to the processing button included up to the processing button associated with the stop display element, in succession according to an arrangement order of the processing buttons.
